# EUROPEAN PATENT SPECIFICATION

(11) **EP 4 580 300 B1**
(45) Date of publication and mention of the grant of the patent: **09.09.2026**
(21) Application number: 23887680.9
(22) Date of filing: 26.09.2023
(51) Int. Cl.: H04W 74/0833, H04W 52/14, H04W 52/32, H04W 52/36, H04W 52/50

(54) **SIGNAL TRANSMISSION METHOD**
SIGNALÜBERTRAGUNGSVERFAHREN
PROCÉDÉ DE TRANSMISSION DE SIGNAL

(30) Priority: 09.11.2022 CN 202211400292
(43) Date of publication of application: 02.07.2025
(73) Proprietor: Honor Device Co., Ltd., Shenzhen, Guangdong 518040 (CN)
(72) Inventor: ZENG, Yongbo, Shenzhen, Guangdong 518040 (CN)
(74) Representative: Gill Jennings & Every LLP
(86) International application number: PCT/CN2023/121543
(87) International publication number: WO 2024/098987

(56) References cited:
- CN-A- 115 191 145
- CN-A- 115 211 214
- US-A1- 2020 413 352
- JIANCHI ZHU ET AL: "Discussion on PRACH coverage enhancement", vol. RAN WG1, no. Toulouse, FR; 20221114 - 20221118, 7 November 2022 (2022-11-07), XP052222101, Retrieved from the Internet <URL:https://www.3gpp.org/ftp/TSG_RAN/WG1_RL1/TSGR1_111/Docs/R1-2211537.zip R1-2211537.docx> [retrieved on 20221107]
- MODERATOR (CHINA TELECOM): "FL Summary#1 of PRACH coverage enhancements", 3GPP DRAFT; R1-2210318, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20221010 - 20221019, 14 October 2022 (2022-10-14), Mobile Competence Centre ; 650, route des Lucioles ; F-06921 Sophia-Antipolis Cedex ; France, XP052259786
- MODERATOR (CHINA TELECOM): "FL Summary#2 of PRACH coverage enhancements", 3GPP DRAFT; R1-2210553, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20221010 - 20221019, 17 October 2022 (2022-10-17), Mobile Competence Centre ; 650, route des Lucioles ; F-06921 Sophia-Antipolis Cedex ; France, XP052260018

## Description

### TECHNICAL FIELD

This application relates to the field of communication, and in particular, to a signal transmission method.

### BACKGROUND

In a wireless communication system, insufficient uplink coverage affects communication quality between a terminal device and a network device. A physical random access channel (physical random access channel, PRACH) transmission process is an aspect affected by uplink signal coverage. Especially, a signal in a high frequency band, for example, an FR2 (frequency range 2) frequency band, is easily affected by a coverage range.

In a random access process, the terminal device initiates random access by sending a message 1 (message 1, which may also be referred to as "Msg1") to the network device. The message 1 includes a random access preamble sequence preamble, and carries information used for identifying an identity of a terminal. A process in which the terminal device sends a preamble to the network device is referred to as "PRACH transmission (PRACH transmission)". Currently, when the terminal device initiates the "PRACH transmission" to the network device, a higher layer of the terminal device transfers configuration information of a PRACH transmission parameter. The configuration information includes a PRACH preamble format (PRACH preamble format), a time resource, and a frequency resource that are used for the PRACH transmission. Each PRACH transmission is performed in a PRACH occasion (PRACH occasion) by using a determined PRACH preamble format, and is referred to as "a PRACH transmission" (a PRACH transmission). In a PRACH transmission, a problem of insufficient uplink (up link, UL) coverage is prone to occur. Therefore, a signal transmission method that can enhance uplink coverage of the terminal device is urgently needed.

JIANCHI ZHU ET AL: "Discussion on PRACH coverage enhancement", 3GPP DRAFT; R1-2211537; TYPE DISCUSSION; NR_COV_ENH2-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Toulouse, FR; 20221114 - 20221118 7 November 2022 (2022-11-07) discusses PRACH coverage enhancement. Moderator (China Telecom): "FL Summary#1 of PRACH coverage enhancements", 3GPP Draft; R1-2210318, 3rd Generation Partnership Project (3GPP), Mobile Competence Centre; 650, route des Lucioles ; F-06921 Sophia- Antipolis Cedex; France, vol. RAN WG1, no. e-Meeting; 20221010 - 20221019, 14 October 2022 (2022-10-14) discusses PRACH coverage enhancement.

### SUMMARY

This application provides a signal transmission method which helps enhance uplink coverage of a terminal device and improves system performance.

According to a first aspect, a signal transmission method is provided, including: determining, by a terminal device, before triggering a physical random access channel PRACH transmission, whether a to-be-performed PRACH transmission is a first PRACH transmission; determining, by the terminal device, in a case that the to-be-performed PRACH transmission is not the first PRACH transmission, whether the to-be-performed PRACH transmission is first multiple PRACH transmissions; and initiating, by the terminal device, in a case that the to-be-performed PRACH transmission is the first multiple PRACH transmissions, multiple PRACH transmissions to a network device based on a quantity of transmissions of the to-be-performed PRACH transmission and a transmit power of the to-be-performed PRACH transmission, where the quantity of transmissions of the to-be-performed PRACH transmission and the transmit power of the to-be-performed PRACH transmission are determined by the terminal device based on a reference signal receiving power RSRP.

According to the signal transmission method provided in this application, the terminal device determines whether the to-be-performed PRACH transmission is the first PRACH transmission and/or the first multiple PRACH transmissions. In a case of determining the to-be-performed PRACH transmission as the first multiple PRACH transmissions, the terminal device initiates multiple PRACH transmissions to the network device based on the quantity of transmissions of the to-be-performed PRACH transmission and the transmit power of the to-be-performed PRACH transmission. In this way, the network device combines and receives multiple received PRACH signals, which helps enhance uplink coverage of the terminal device, and further improves system performance. In addition, that the terminal device and the network device perform multiple PRACH transmissions increases a success rate of random access of the terminal device, which helps reduce a random access delay, and further improves random access efficiency.

With reference to the first aspect, in some implementations of the first aspect, the foregoing method further includes: initiating, by the terminal device, in a case that the to-be-performed PRACH transmission is the first PRACH transmission, the PRACH transmission to the network device based on the quantity of transmissions of the to-be-performed PRACH transmission and the transmit power of the to-be-performed PRACH transmission, where the quantity of transmissions of the to-be-performed PRACH transmission and the transmit power of the to-be-performed PRACH transmission are determined by the terminal device based on the RSRP.

In the invention, in a multi-band PRACH transmission scenario, in a case that the to-be-performed PRACH transmission is the first multiple PRACH transmissions, the foregoing method further includes: determining, by the terminal device, a band offset value of a target band based on the target band; determining, by the terminal device, a quantity of offset transmissions of the to-be-performed PRACH transmission based on the band offset value of the target band and a third correspondence, where the third correspondence includes a correspondence between at least one band offset value and at least one quantity of offset transmissions; and determining, by the terminal device, a sum of a quantity of transmissions of a reference band and the quantity of offset transmissions of the to-be-performed PRACH transmission as the quantity of transmissions of the to-be-performed PRACH transmission.

In the embodiments of this application, in the multi-band PRACH transmission scenario, the terminal device determines the quantity of offset transmissions of the to-be-performed PRACH transmission by using the band offset value of the target band and the prestored table. Real-time operation does not need to be performed when the quantity of offset transmissions is calculated, helping reduce operation pressure of the terminal device and improving efficiency of initiating random access by the terminal device.

With reference to the first aspect, in some implementations of the first aspect, in the multi-band PRACH transmission scenario, in a case that the to-be-performed PRACH transmission is the multiple PRACH transmissions, the foregoing method further includes: determining, by the terminal device, the quantity of offset transmissions of the to-be-performed PRACH transmission based on the target band and a fourth correspondence, where the fourth correspondence includes a correspondence between at least one band and at least one quantity of offset transmissions; and determining, by the terminal device, the sum of the quantity of transmissions of the reference band and the quantity of offset transmissions of the to-be-performed PRACH transmission as the quantity of transmissions of the to-be-performed PRACH transmission.

With reference to the first aspect, in some implementations of the first aspect, in the multi-band PRACH transmission scenario, in a case that the to-be-performed PRACH transmission is the first PRACH transmission or the first multiple PRACH transmissions, the foregoing method further includes: determining, by the terminal device, the band offset value of the target band based on the target band; determining, by the terminal device, a value obtained through subtracting the first threshold from a sum of the RSRP and the band offset value of the target band as a second difference; determining, by the terminal device, a transmit power offset value of the to-be-performed PRACH transmission based on the second difference and a fifth correspondence, where the fifth correspondence includes a correspondence between at least one difference and at least one transmit power offset value; and determining, by the terminal device, a sum of the transmit power offset value of the to-be-performed PRACH transmission and a transmit power of a single PRACH transmission as the transmit power of the to-be-performed PRACH transmission.

With reference to the first aspect, in some implementations of the first aspect, the foregoing method further includes: obtaining, by the terminal device, a quantity of transmissions of a previous PRACH transmission and a transmit power of the previous PRACH transmission in a case that the to-be-performed PRACH transmission is not the first multiple PRACH transmissions; determining, by the terminal device, the quantity of transmissions of the to-be-performed PRACH transmission based on the quantity of transmissions of the previous PRACH transmission; determining, by the terminal device, the transmit power of the to-be-performed PRACH transmission based on the transmit power of the previous PRACH transmission; and initiating, by the terminal device, the PRACH transmission to the network device based on the quantity of transmissions of the to-be-performed PRACH transmission and the transmit power of the to-be-performed PRACH transmission.

In the embodiments of this application, in a case of different PRACH transmissions, the terminal device determines the quantity of transmissions of the to-be-performed PRACH transmission and the transmit power of the to-be-performed PRACH transmission in different manners. A processing manner of the terminal device is more flexible and is applicable to different PRACH transmission scenarios.

With reference to the first aspect, in some implementations of the first aspect, before the determining whether a to-be-performed PRACH transmission is a first PRACH transmission, the foregoing method further includes: determining, by the terminal device, the to-be-performed PRACH transmission as the multiple PRACH transmissions or the single PRACH transmission based on a trigger condition, where the trigger condition includes at least one threshold for triggering the PRACH transmission.

With reference to the first aspect, in some implementations of the first aspect, the trigger condition is sent by the network device to the terminal device, or is agreed on in a protocol.

With reference to the first aspect, in some implementations of the first aspect, before the terminal device receives a trigger message of a PRACH transmission sent by the network device, the foregoing method further includes: receiving, by the terminal device, a synchronization signal block SSB from the network device; and performing, by the terminal device, measurement on the SSB, to obtain the RSRP.

With reference to the first aspect, in some implementations of the first aspect, the to-be-performed PRACH transmission is the multiple PRACH transmissions in a case that the RSRP is less than or equal to a second threshold.

With reference to the first aspect, in some implementations of the first aspect, the to-be-performed PRACH transmission is the single PRACH transmission in a case that the RSRP is greater than the second threshold.

With reference to the first aspect, in some implementations of the first aspect, the foregoing method further includes: determining, by the terminal device, a sum of a power increment value and the transmit power of the single PRACH transmission as the transmit power of the to-be-performed PRACH transmission in a case that the RSRP is greater than the second threshold and is less than or equal to a third threshold.

In the embodiments of this application, multiple thresholds are set, so that transmit powers of the PRACH transmission that are determined by the terminal device are different under different thresholds. In this way, the terminal device may more accurately determine corresponding transmit powers of the PRACH transmission under different RSRPs, helping increase a success rate of random access and enhance uplink coverage of the terminal device.

With reference to the first aspect, in some implementations of the first aspect, in the multi-band PRACH transmission scenario, before the determining whether a to-be-performed PRACH transmission is a first PRACH transmission, the foregoing method further includes: determining, by the terminal device, the band offset value of the target band based on the target band; and determining, by the terminal device, the to-be-performed PRACH transmission as the multiple PRACH transmissions or the single PRACH transmission based on a trigger condition and the band offset value of the target band, where the trigger condition includes at least one threshold for triggering the PRACH transmission.

With reference to the first aspect, in some implementations of the first aspect, the to-be-performed PRACH transmission is the multiple PRACH transmissions in a case that a sum of the RSRP and the band offset value of the target band is less than or equal to a second threshold.

With reference to the first aspect, in some implementations of the first aspect, the to-be-performed PRACH transmission is the single PRACH transmission in a case that the sum of the RSRP and the band offset value of the target band is greater than the second threshold.

With reference to the first aspect, in some implementations of the first aspect, the foregoing method further includes: determining, by the terminal device, a sum of a power increment value and the transmit power of the single PRACH transmission as the transmit power of the to-be-performed PRACH transmission in a case that the sum of the RSRP and the band offset value of the target band is greater than the second threshold and is less than or equal to a third threshold.

With reference to the first aspect, in some implementations of the first aspect, the band offset value of the target band is sent by the network device to the terminal device, or is agreed on in a protocol.

The invention is defined in the appended claims

### BRIEF DESCRIPTION OF DRAWINGS

FIG. 1 is a schematic diagram of a communication system used in an embodiment of this application;
FIG. 2 is a schematic flowchart of contention random access according to an embodiment of this application;
FIG. 3 is a schematic flowchart of a signal transmission method according to an embodiment of this application;
FIG. 4 is a schematic flowchart of another signal transmission method according to an embodiment of this application;
FIG. 5 is a schematic flowchart of still another signal transmission method according to an embodiment of this application;
FIG. 6 is a schematic block diagram of a signal transmission apparatus according to an embodiment of this application; and
FIG. 7 is a schematic block diagram of another signal transmission apparatus according to an embodiment of this application.

### DESCRIPTION OF EMBODIMENTS

The following describes technical solutions of this application with reference to the accompanying drawings.

For ease of describing the technical solutions in the embodiments of this application clearly, in the embodiments of this application, words such as "first" and "second" are used to distinguish same or similar items with a basically same function and role. A person skilled in the art may understand that the words such as "first" and "second" do not define a quantity and an execution sequence, and the words such as "first" and "second" do not indicate a definite difference.

It is to be noted that, in this application, a word such as "exemplary" or "for example" is used for representing giving an example, an illustration, or a description. Any embodiment or design scheme described as "exemplary" or "for example" in this application should not be explained as being more preferred or having more advantages than another embodiment or design scheme. Exactly, use of the word "exemplary" or "for example" or the like is intended to present a related concept in a specific manner.

In addition, "at least one" means one or more and "multiple" means two or more. "And/or" describes an association relationship for associated objects and represents that three relationships may exist. For example, A and/or B may represent: only A exists, both A and B exist, and only B exists, where A and B may be singular or plural. The character "/" generally indicates an "or" relationship between the associated objects. "At least one of the following" or a similar expression thereof refers to any combination of these items, including one item or any combination of multiple items. For example, at least one of a, b, or c may represent a, b, c, "a and b", "a and c", "b and c", or "a, b, and c", where a, b, and c may be singular or plural.

In the embodiments of this application, descriptions such as "when...", "in a case that...", "if", and "supposing that" all mean that a device performs corresponding processing in an objective situation, do not limit time, do not require that the device needs to perform a determining action during implementation, and do not mean that another limitation exists.

The technical solutions provided in this application may be applied to various communication systems, such as a long term evolution (long term evolution, LTE) system, an LTE-frequency division duplex (frequency division duplex, FDD) system, an LTE-time division duplex (time division duplex, TDD) system, a 5th generation (5th generation, 5G) mobile communication system, a new radio (new radio, NR) system or another evolved communication system, and a next generation mobile communication system of the 5G communication system.

The terminal device in the embodiments of this application may alternatively be referred to as user equipment (user equipment, UE), a mobile station (mobile station, MS), a mobile terminal (mobile terminal, MT), an access terminal, a user unit, a user station, a mobile site, the mobile station, a remote station, a remote terminal, a mobile device, a user terminal, a terminal, a wireless communication device, a user agent, or a user apparatus.

The terminal device may be a device providing speech/data connectivity to a user, for example, may be a handheld device or an in-vehicle device having a wireless connection function. Currently, examples of some terminal devices include: a mobile phone (mobile phone), a tablet computer, a notebook computer, a palmtop computer, a mobile Internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, an in-vehicle device, the wearable device, a terminal device in a 5G network, a terminal device in a future evolved public land mobile network (public land mobile network, PLMN), and the like. This is not limited in this application.

As an example rather than a limitation, in this application, the terminal device may be a terminal device in an Internet of Things (internet of things, IoT) system. Internet of Things is an important component in future development of information technologies, and a main technical feature thereof is connecting a thing to a network by using a communication technology, to implement an intelligent network of human-machine interconnection and interconnection between things. As an example rather than a limitation, the terminal device in the embodiments of this application may be a wearable device. The wearable device may also be referred to as a wearable intelligent device, and is a general term of wearable devices, such as glasses, gloves, a watch, clothes, and shoes, that are developed by applying a wearable technology to intelligent design of daily wear. The wearable device is a portable device that can be directly worn on a body or integrated with clothes or an accessory of a user. The wearable device is more than a hardware device, and can even achieve a powerful function through software support, data interaction, and cloud interaction. Generalized wearable intelligent devices include full-featured and large-size devices that can implement complete or partial functions without depending on smartphones, such as smart watches or smart glasses, and devices that focus on only one type of application function and need to work with other devices such as smartphones, such as various smart bracelets or smart jewelry for monitoring physical signs.

As an example rather than a limitation, in the embodiments of this application, the terminal device may further be a terminal device in machine type communication (machine type communication, MTC). In addition, the terminal device may further be an in-vehicle module, an in-vehicle assembly, an in-vehicle component, an in-vehicle chip, an in-vehicle unit, or the like that is built into a vehicle as one or more components or units. A vehicle may perform the method provided in this application by using the built-in in-vehicle module, in-vehicle assembly, in-vehicle component, in-vehicle chip, in-vehicle unit, or the like. Therefore, the embodiments of this application may also be applied to Internet of Vehicles, for example, vehicle to everything (vehicle to everything, V2X), long term evolution-vehicle (long term evolution-vehicle, LTE-V), or a vehicle-to-vehicle (vehicle-to-vehicle, V2V) technology.

The network device involved in this application may be a device communicating with the terminal device. The network device may also be referred to as an access network device or a wireless access network device. The network device may be a transmission reception point (transmission reception point, TRP), or may be an evolved NodeB (evolved NodeB, eNB or eNodeB) in an LTE system, or may be a home NodeB (for example, home evolved NodeB, or home Node B, HNB) or a base band unit (base band unit, BBU), or may be a radio controller in a cloud radio access network (cloud radio access network, CRAN) scenario. Alternatively, the network device may be a relay station, an access point, an in-vehicle device, a wearable device, a network device in a 5G network, a network device in a future evolved PLMN network, or the like, or may be an access point (access point, AP) in a WLAN, or may be a gNB in an NR system. The foregoing network device may further be a metro base station, a micro base station, a pico base station, a femto base station, or the like. This is not limited in this application.

In a network structure, the network device may include a centralized unit (centralized unit, CU) node, a distributed unit (distributed unit, DU) node, a radio access network (radio access network, RAN) device containing a CU node and a DU node, or a RAN device containing a control plane CU node (CU-CP node), a user plane CU node (CU-UP node), and a DU node.

The network device provides a service for a cell, and the terminal device communicates with the cell by using a transmission resource (for example, a frequency domain resource or a spectrum resource) allocated by the network device. The cell may belong to a macro base station (for example, macro eNB or macro gNB), or may belong to a base station corresponding to a small cell (small cell). The small cell herein may include: a metro cell (metro cell), a micro cell (micro cell), a pico cell (pico cell), a femto cell (femto cell), and the like. These small cells have features of small coverage and low transmit power, and are suitable for providing high-speed data transmission services.

In the embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (which is also referred to as a main memory). An operating system may be any one or more computer operating systems for implementing service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in the embodiments of this application is not particularly limited in the embodiments of this application, provided that communication can be performed according to the method provided in the embodiments of this application. For example, the execution body of the method provided in the embodiments of this application may be a terminal device or a network device, or a functional module that is in a terminal device or a network device and that can execute a program.

In addition, aspects or features of the embodiments of this application may be implemented as a method, an apparatus, or a product that uses standard programming and/or engineering technologies. The term "product" used in this application covers a computer program that can be accessed from any computer-readable component, carrier, or medium. For example, a computer-readable medium may include, but is not limited to: a magnetic storage device (such as a hard disk, a floppy disk, or a magnetic tape), an optical disc (such as a compact disc (compact disc, CD), or a digital versatile disc (digital versatile disc, DVD)), a smartcard and a flash memory device (such as an erasable programmable read-only memory (erasable programmable read-only memory, EPROM), a card, a stick, or a key drive). In addition, various storage media described in this specification may indicate one or more devices and/or other machine-readable media that are used to store information. The term "machine-readable media" may include, but is not limited to various other media that can store, contain, and/or carry an instruction and/or data.

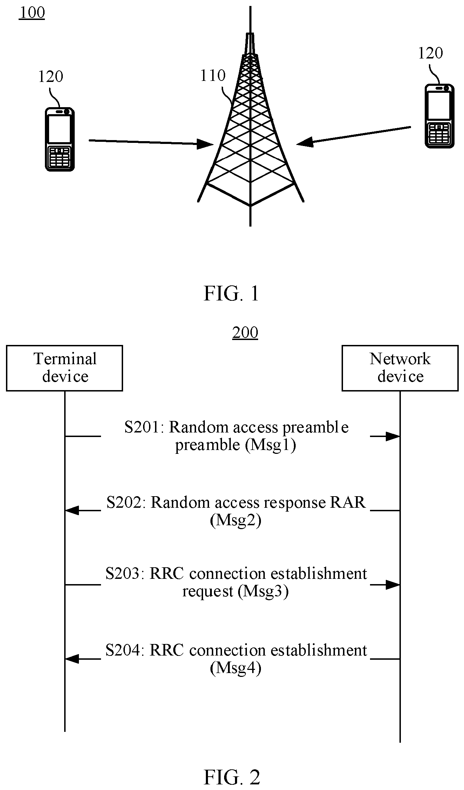

For ease of understanding of the embodiments of this application, a communication system applicable to the embodiments of this application is first described in detail with reference to FIG. 1.

FIG. 1 shows a communication system 100 that may be used in an embodiment of this application. As shown in FIG. 1, the communication system 100 may include at least one network device, for example, a network device 110 shown in FIG. 1. The communication system 100 may further include at least one terminal device, for example, a terminal device 120 shown in FIG. 1. The network device 110 and the terminal device 120 may communicate with each other by using a radio link. Each communication device, for example, the network device 110 or the terminal device 120, may be configured with multiple antennas. The multiple antennas may include at least one transmit antenna for sending a signal and at least one receive antenna for receiving a signal. In addition, each communication device further additionally includes a transmitter chain and a receiver chain, and a person of ordinary skill in the art may understand that both the transmitter chain and the receiver chain may include multiple components (for example, a processor, a modulator, a multiplexer, a demodulator, a demultiplexer, or an antenna) related to signal sending and signal receiving. Therefore, the network device 110 and the terminal device 120 may communicate with each other by using a multi-antenna technology.

FIG. 1 exemplarily shows one network device and two terminal devices. Optionally, the communication system 100 may include multiple network devices, and in a coverage area of each network device, another quantity of terminal devices may be included. This is not limited in the embodiments of this application.

In the foregoing communication system 100, the terminal device 120 may initiate random access, and request to access the network device 110, to facilitate subsequent data communication with the network device 110. FIG. 2 shows a four-step random access process of a terminal device. The following steps are included.

S201: The terminal device sends a random access preamble preamble (which may be represented by Msg1) by using a PRACH resource. Correspondingly, a network device receives the preamble, and the network device obtains a preamble ID by detecting the preamble and estimates an uplink transmission delay.

S202: The network device replies to the terminal device with a random access response RAR (which may be represented by Msg2). The Msg2 may carry the following information: a timing advance corresponding to the uplink transmission delay, the preamble ID, a temporary user identifier allocated by the network device to the terminal, and uplink scheduling resource grant information.

S203: The terminal device sends a radio resource control (radio resource control, RRC) connection establishment request (which may be represented by Msg3) to the network device. The terminal device adjusts uplink timing based on the timing advance in the Msg2, and sends the Msg3 to the network device based on the uplink scheduling resource grant information in the Msg2. The Msg3 may carry the temporary user identifier allocated by the network device to the terminal device in the Msg2.

S204: The network device sends an RRC connection establishment response (which may be represented by Msg4) to the terminal device. The Msg4 may carry a contention resolution MAC control element (MAC control element, MAC CE), and the contention resolution MAC CE specifically represents that the network device allows or does not allow the terminal device to access. Therefore, in this step, contention and a conflict that are generated when multiple terminal devices try to use a same random access resource and a same preamble ID for access are resolved.

In this application, that the terminal device sends the preamble to the network device is referred to as "PRACH transmission". The foregoing S201 is that the terminal device and the network device perform a PRACH transmission. If the terminal device does not receive an RAR message returned by the network device, contention resolution fails, or the like, the terminal device may consider that the PRACH transmission fails, and the terminal device re-initiates a PRACH transmission to the network device, to be specific, re-selects a corresponding preamble and a time-frequency resource to send.

A problem of insufficient uplink coverage occurs in the foregoing random access process, especially in a case that the terminal device is located in a coverage area with a weak cellular communication signal. In addition, that after the PRACH transmission fails, the terminal device re-selects a preamble to perform a PRACH transmission with the network device results in a random access delay, further affecting random access efficiency.

To resolve the foregoing technical problems, this application provides a signal transmission method and apparatus. A terminal device determines whether a to-be-performed PRACH transmission is a first PRACH transmission and/or first multiple PRACH transmissions. In a case of determining the to-be-performed PRACH transmission as the first multiple PRACH transmissions, the terminal device initiates multiple PRACH transmissions to a network device based on a quantity of transmissions of the to-be-performed PRACH transmission and a transmit power of the to-be-performed PRACH transmission. In this way, the network device can combine and receive multiple received PRACH signals, which helps enhance uplink coverage of the terminal device, and further improves system performance. In addition, that the terminal device and the network device perform multiple PRACH transmissions can increase a success rate of random access of the terminal device, which helps reduce a random access delay, and further improves random access efficiency.

The following describes the technical solutions of this application and how to resolve the foregoing technical problems according to the technical solutions of this application in detail by using specific embodiments. The following several specific embodiments may be independently implemented, and may also be combined with each other, and the same or similar concepts or processes may not be described repeatedly in some embodiments.

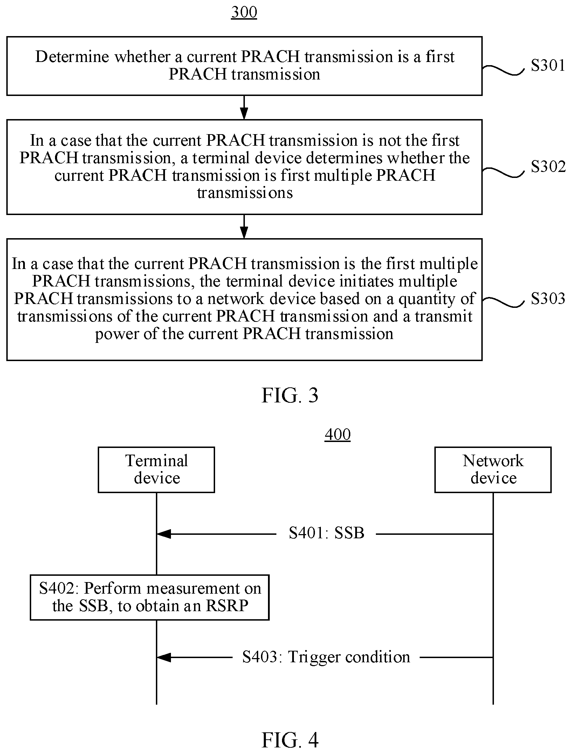

FIG. 3 is a schematic flowchart of a signal transmission method 300 according to an embodiment of this application. The method 300 may be applied to the communication system 100 shown in FIG. 1, but the embodiments of this application are not limited thereto. As shown in FIG. 3, the method 300 may include the following steps.

S301: A terminal device determines whether a to-be-performed PRACH transmission is a first PRACH transmission.

Exemplarily, a first counter may be arranged in the terminal device. When the terminal device receives a PRACH transmission request triggered by a higher layer or a PDCCH instruction, the first counter starts to count from 0. After the terminal device attempts to perform a PRACH transmission, the first counter performs counting once. In a case that a count of the first counter is 0, the to-be-performed PRACH transmission is the first PRACH transmission; otherwise, the to-be-performed PRACH transmission is not the first PRACH transmission.

S302: In a case that the to-be-performed PRACH transmission is not the first PRACH transmission, the terminal device determines whether the to-be-performed PRACH transmission is first multiple PRACH transmissions.

It should be understood that, the foregoing "multiple PRACH transmissions" (multiple PRACH transmissions) may be understood as: when sending a Msg1 for random access, the terminal device performs multiple PRACH transmissions on a same beam, where one of the multiple PRACH transmissions may occupy one or more PRACH occasions for transmission, and a same preamble sequence is used in the multiple PRACH transmissions.

Exemplarily, a second counter may be further arranged in the terminal device. When the terminal device is triggered for multiple PRACH transmissions, the second counter starts to count from 0. After the terminal device performs multiple PRACH transmissions once, the second counter performs counting once. In a case that a count of the second counter is 0, the to-be-performed PRACH transmission is determined as the first multiple PRACH transmissions after triggering of the multiple PRACH transmissions; otherwise, the to-be-performed PRACH transmission is not the first multiple PRACH transmissions.

S303: In a case that the to-be-performed PRACH transmission is the first multiple PRACH transmissions, the terminal device initiates multiple PRACH transmissions to a network device based on a quantity of transmissions of the to-be-performed PRACH transmission and a transmit power of the to-be-performed PRACH transmission. The quantity of transmissions of the to-be-performed PRACH transmission and the transmit power of the to-be-performed PRACH transmission are determined by the terminal device based on a reference signal receiving power (reference signal receiving power, RSRP).

It should be understood that, the RSRP, based on which the PRACH transmission is performed, may be a receiving power of a reference signal in a synchronization signal block (synchronization signal and PBCH block, SSB). The terminal device may receive an SSB sent by the network device, and perform measurement on a reference signal in the SSB, to obtain the foregoing RSRP. Initiating multiple PRACH transmissions to the network device may also be referred to as performing multiple PRACH transmissions between the terminal device and the network device.

According to the signal transmission method provided in this application, the terminal device determines whether the to-be-performed PRACH transmission is the first PRACH transmission and/or the first multiple PRACH transmissions. In a case of determining the to-be-performed PRACH transmission as the first multiple PRACH transmissions, the terminal device initiates multiple PRACH transmissions to the network device based on the quantity of transmissions of the to-be-performed PRACH transmission and the transmit power of the to-be-performed PRACH transmission. In this way, the network device can combine and receive multiple received PRACH signals, which helps enhance uplink coverage of the terminal device, and further improves system performance. In addition, that the terminal device and the network device perform multiple PRACH transmissions can increase a success rate of random access of the terminal device, which helps reduce a random access delay, and further improves random access efficiency.

In an optional embodiment, in a case that the to-be-performed PRACH transmission is the first PRACH transmission, the terminal device initiates the PRACH transmission to the network device based on the quantity of transmissions of the to-be-performed PRACH transmission and the transmit power of the to-be-performed PRACH transmission, where the quantity of transmissions of the to-be-performed PRACH transmission and the transmit power of the to-be-performed PRACH transmission are determined by the terminal device based on the RSRP.

In different PRACH transmission scenarios, manners in which the terminal device determines the quantity of transmissions of the to-be-performed PRACH transmission and the transmit power of the to-be-performed PRACH transmission based on the RSRP are different. PRACH transmission scenarios include two scenarios: a single-band PRACH transmission scenario and a multi-band PRACH transmission scenario. In this embodiment of this application, a scenario in which the network device allocates a single band or a single carrier for the PRACH transmission is referred to as the "single-band PRACH transmission scenario", and a scenario in which the network device configures a multi-band or multi-carrier resource for the PRACH transmission is referred to as the "multi-band PRACH transmission". In the multi-band PRACH transmission scenario, the terminal device may use one of multiple bands as a target band to perform the PRACH transmission. The target band may be randomly selected by the terminal device, or may be designated by the network device for the terminal device, or may be agreed on in a protocol. This is not limited in the embodiments of this application.

Optionally, if the foregoing first PRACH transmission is multiple PRACH transmissions, a quantity of transmissions of the to-be-performed multiple PRACH transmissions needs to be determined. If a quantity of transmissions of the first PRACH transmission is a single PRACH transmission, the quantity of transmissions of the to-be-performed PRACH transmission is one, the quantity of transmissions does not need to be further determined, and only a transmission power of the to-be-performed PRACH transmission needs to be determined.

### Scenario 1: Single-band PRACH transmission

The terminal device may determine the quantity of transmissions of the to-be-performed PRACH transmission based on the RSRP in multiple different manners.

In a possible implementation, the terminal device determines the quantity of transmissions of the to-be-performed PRACH transmission based on the RSRP and a first correspondence. Specifically, the first correspondence includes a correspondence between at least one RSRP value and at least one quantity of transmissions. The RSRP value may be a numerical RSRP value, or may be an RSRP value range.

Exemplarily, when the RSRP value is a specific numerical RSRP value, the first correspondence may be shown in Table 1.

**Table 1**

| RSRP value | Quantity of transmissions |
|---|---|
| -105 dBm | 10 |
| -110 dBm | 20 |
| -115 dBm | 30 |

When the RSRP value is an RSRP value range, the first correspondence may be shown in Table 2.

**Table 2**

| RSRP value | Quantity of transmissions |
|---|---|
| [-105, -100] dBm | 10 |
| (-110, -105] dBm | 20 |
| (-115, -110] dBm | 30 |

The terminal device may obtain, through table lookup, a quantity of transmissions corresponding to the RSRP, and the quantity of transmissions is determined as the quantity of transmissions of the to-be-performed PRACH transmission.

Exemplarily, when the to-be-performed PRACH transmission is the multiple PRACH transmissions and the RSRP is "-105 dBm", it may be obtained from Table 1 that the quantity of transmissions corresponding to the RSRP is "10", so that the quantity of transmissions of the to-be-performed PRACH transmission is "10", which may also be understood as that a quantity of PRACH transmissions using a same preamble in the to-be-performed PRACH transmission is "10". Alternatively, it may be obtained from Table 2 that if an RSRP value matching the RSRP is "[-105, - 100] dBm" and a corresponding quantity of transmissions is "10", so that the quantity of transmissions of the to-be-performed PRACH transmission is "10".

In the embodiments of this application, the terminal device determines the quantity of transmissions of the to-be-performed PRACH transmission by using the RSRP and a prestored table without real-time operation, helping reduce operation pressure of the terminal device and improving efficiency of initiating random access by the terminal device.

In another possible implementation, the terminal device may obtain the quantity of transmissions of the to-be-performed PRACH transmission by calculation according to the following formula: $C = {C}_{ref} + \left⌈\frac{{R}_{ref} - R}{S}\right⌉ ,$
where *C* represents a quantity of transmissions of to-be-performed multiple PRACH transmissions, *R_{ref}* is a reference RSRP threshold that is agreed on in a protocol or preconfigured, *C_{ref}* represents a quantity of PRACH transmissions corresponding to *R_{ref} , R* represents an RSRP value currently measured by the terminal device, S represents an RSRP step length that is agreed on in a protocol or preconfigured, and $\left⌈⋅\right⌉$ represents rounding up.

The terminal device may determine the transmit power of the to-be-performed PRACH transmission in the following manner. First, the terminal device calculates a first difference between the RSRP and a first threshold. Then, the terminal device determines a transmit power offset value of the to-be-performed PRACH transmission based on the first difference and a second correspondence. The second correspondence includes a correspondence between at least one difference and at least one transmit power offset value. Finally, the terminal device determines a sum of the transmit power offset value of the to-be-performed PRACH transmission and a transmit power of a single PRACH transmission as the transmit power of the to-be-performed PRACH transmission.

Specifically, the transmit power of the single PRACH transmission is determined based on a physical random access channel power control calculation formula defined in TS38.213. Without confusion, for a specific transmission occasion and on a specific carrier of a specific cell, the terminal device may calculate, according to the following formula, a transmit power of sending a PRACH on an active uplink bandwidth part (active UL BWP): ${P}_{PRACH} = min \left({P}_{CMAX},{P}_{PRACH , target}+PL\right) \left[dBm\right] ,$
where *P_{PRACH}* represents a transmit power of a PRACH of the terminal device in a single band, *P_{CMAX}* is a maximum output power configured by the terminal device, *P_{PRACH,target}* represents a target PRACH receiving power provided by a higher layer, and *PL* represents a path loss value obtained by the terminal device through measurement by using a downlink reference signal in the SSB.

In the foregoing process, the terminal device may determine the transmit power offset value of the to-be-performed PRACH transmission based on the first difference and the second correspondence in the following manner.

Exemplarily, the second correspondence may be shown in Table 3. When the first difference between the RSRP and the first threshold is "5", the terminal device may obtain, through table lookup, that the transmit power offset value is 2 dBm. In other words, the transmit power offset value of the to-be-performed PRACH transmission is "2 dBm".

**Table 3**

| Difference | Transmit power offset value |
|---|---|
| 5 | 2 dBm |
| 10 | 4 dBm |
| 15 | 6 dBm |

In the embodiments of this application, the terminal device determines the transmit power offset value of the to-be-performed PRACH transmission by using the first difference and the prestored table, so that the terminal device does not need to perform operation when determining the transmit power offset value of the to-be-performed PRACH transmission, helping reduce operation pressure of the terminal device and improving efficiency of initiating random access by the terminal device.

### Scenario 2: Multi-band PRACH transmission

The terminal device may determine the quantity of transmissions of the to-be-performed PRACH transmission based on the RSRP in multiple different manners.

In a possible implementation, the terminal device first determines a band offset value of the target band based on the target band. Then, the terminal device determines a quantity of offset transmissions of the to-be-performed PRACH transmission based on the band offset value of the target band and a third correspondence. The third correspondence includes a correspondence between at least one band offset value and at least one quantity of offset transmissions. Finally, the terminal device determines a sum of a quantity of transmissions of a reference band and the quantity of offset transmissions of the to-be-performed PRACH transmission as the quantity of transmissions of the to-be-performed PRACH transmission.

It should be understood that, to achieve a similar coverage range in different frequency bands, quantities of PRACH transmissions in different frequency bands may also be different. Different bands correspond to different band offset values, and the band offset value is an offset value of a band relative to the reference band. It should be further understood that, a manner of determining the quantity of transmissions of the reference band is the same as a manner of determining the quantity of transmissions of the to-be-performed PRACH transmission in the foregoing single-band scenario. Details are not described herein again.

In the foregoing process, the terminal device may determine the quantity of offset transmissions of the to-be-performed PRACH transmission based on the band offset value of the target band and the third correspondence in the following manner.

Exemplarily, as shown in Table 4, when the target band is a "band 1", a band offset value of the band 1 relative to the reference band is "5". The third correspondence may be shown in Table 5. When the band offset value is "5", the terminal device may obtain, through table lookup, that the quantity of offset transmissions corresponding to the band offset value of the target band is "10". In other words, the quantity of offset transmissions of the to-be-performed PRACH transmission is "10".

**Table 4**

| Band | Band offset value |
|---|---|
| Band 1 | 5 |
| Band 2 | 10 |
| Band 3 | 15 |

**Table 5**

| Band offset value | Quantity of offset transmissions |
|---|---|
| 5 | 10 |
| 10 | 20 |
| 15 | 30 |

In the embodiments of this application, in the multi-band PRACH transmission scenario, the terminal device determines the quantity of offset transmissions of the to-be-performed PRACH transmission by using the band offset value of the target band and the prestored table, so that the terminal device does not need to perform real-time operation when determining the quantity of offset transmissions of the to-be-performed PRACH transmission, helping reduce operation pressure of the terminal device and improving efficiency of initiating random access by the terminal device.

In another possible implementation, first, the terminal device determines the quantity of offset transmissions of the to-be-performed PRACH transmission based on the target band and a fourth correspondence. The fourth correspondence includes a correspondence between at least one band and at least one quantity of offset transmissions. Then, the terminal device determines the sum of a quantity of transmissions of the reference band and the quantity of offset transmissions of the to-be-performed PRACH transmission as the quantity of transmissions of the to-be-performed PRACH transmission.

It should be understood that, a manner of determining the quantity of transmissions of the reference band is the same as a manner of determining the quantity of transmissions of the to-be-performed PRACH transmission in the foregoing single-band scenario. Details are not described herein again.

Exemplarily, the fourth correspondence may be shown in Table 6. When the target band is the "band 1", the terminal device may obtain, through table lookup, that the quantity of offset transmissions is "10". In other words, the quantity of offset transmissions of the to-be-performed PRACH transmission is "10".

**Table 6**

| Band | Quantity of offset transmissions |
|---|---|
| Band 1 | 10 |
| Band 2 | 20 |
| Band 3 | 30 |

In the embodiments of this application, in the multi-band PRACH transmission scenario, the terminal device determines the quantity of offset transmissions of the to-be-performed PRACH transmission by using the target band and the prestored table, so that the terminal device does not need to perform real-time operation when determining the quantity of offset transmissions of the to-be-performed PRACH transmission, helping reduce operation pressure of the terminal device and improving efficiency of initiating random access by the terminal device.

The terminal device may determine the transmit power of the to-be-performed PRACH transmission based on the RSRP in multiple different manners.

In a possible implementation, the terminal device first determines the band offset value of the target band based on the target band. Then, the terminal device determines a value obtained through subtracting the first threshold from a sum of the RSRP and the band offset value of the target band as a second difference. Next, the terminal device determines a transmit power offset value of the to-be-performed PRACH transmission based on the second difference and a fifth correspondence. The fifth correspondence includes a correspondence between at least one difference and at least one transmit power offset value. Finally, the terminal device determines a sum of the transmit power offset value of the to-be-performed PRACH transmission and a transmit power of a single PRACH transmission as the transmit power of the to-be-performed PRACH transmission.

It should be understood that, a manner of calculating the transmit power of the single PRACH transmission is the same as the foregoing manner. Details are not described herein again. To achieve a similar coverage range in different frequency bands, transmit powers of the PRACH transmission in different frequency bands may also be different. Different bands correspond to different band offset values, and the band offset value is an offset value of a band relative to the reference band.

The transmit power offset value of the to-be-performed PRACH transmission may be determined in the following manner.

Exemplarily, when the target band is the band 1, it may be obtained through Table 4 that a corresponding band offset value is "5". When the RSRP measured by the terminal device is "-110 dBm", and the first threshold is set to "-100 dBm", the second difference is: -100+5-(-110)=15. The fifth correspondence may be shown in Table 7. It may be obtained through Table 7 that a corresponding transmit power offset value is "6 dBm", so that the transmit power offset value of the to-be-performed PRACH transmission is "6 dBm".

**Table 7**

| Difference | Transmit power offset value |
|---|---|
| 5 | 2 dBm |
| 10 | 4 dBm |
| 15 | 6 dBm |

In the embodiments of this application, the terminal device determines the transmit power offset value of the to-be-performed PRACH transmission by using the second difference and the prestored table, so that the terminal device does not need to perform real-time operation when determining the transmit power offset value of the to-be-performed PRACH transmission, helping reduce operation pressure of the terminal device and improving efficiency of initiating random access by the terminal device.

In another possible implementation, the terminal device may obtain the transmit power of the to-be-performed PRACH transmission by calculation based on the RSRP specifically by using the following formula: ${P}_{PRACH _ multiband} = min \left({P}_{CMAX},{P}_{PRACH , target}+PL+Q\right) ,$
where *P_{PRACH_multiband}* represents a transmit power of a PRACH of the terminal device in multiple bands, *P_{CMAX}* is a maximum output power configured by the terminal device, *P_{PRACH,target}* represents a target PRACH receiving power provided by a higher layer, Q represents the band offset value of the target band, and *PL* is a path loss value obtained by calculation based on an RSRP of the target band.

In an optional embodiment, in a case that the to-be-performed PRACH transmission is the first PRACH transmission, the terminal device determines the quantity of transmissions of the to-be-performed PRACH transmission and the transmit power of the to-be-performed PRACH transmission based on the RSRP, and initiates the PRACH transmission to the network device.

Specifically, a manner of determining the quantity of transmissions of the to-be-performed PRACH transmission and the transmit power of the to-be-performed PRACH transmission in a case that the to-be-performed PRACH transmission is the first PRACH transmission is the same as a determining manner in the foregoing case that the to-be-performed PRACH transmission is the first multiple PRACH transmissions. Details are not described herein again.

In an optional embodiment, in a case that the to-be-performed PRACH transmission is not the first multiple PRACH transmissions, the terminal device determines the quantity of transmissions of the to-be-performed PRACH transmission and the transmit power of the to-be-performed PRACH transmission based on a quantity of transmissions of a previous PRACH transmission and a transmit power of the previous PRACH transmission.

Specifically, the terminal device obtains the quantity of transmissions of the previous PRACH transmission, and adds a preset quantity of times based on the quantity of transmissions of the previous PRACH transmission. A value obtained through the addition is used as the quantity of transmissions of the to-be-performed PRACH transmission. The terminal device obtains the transmit power of the previous PRACH transmission, and adds a preset value based on the transmit power of the previous PRACH transmission. A value obtained through the addition is used as the transmit power of the to-be-performed PRACH transmission.

Exemplarily, if the quantity of transmissions of the previous PRACH transmission obtained by the terminal device is 4, and the preset quantity of times is 2, the quantity of transmissions of the to-be-performed PRACH transmission is: 4+2=6. If the transmit power of the previous PRACH transmission obtained by the terminal device is 20 dBm, and the preset value is 2 dBm, the transmit power of the to-be-performed PRACH transmission is: 20+2=22 dBm.

It should be understood that, the preset quantity of times and the preset value may be sent by the network device to the terminal device, or may be agreed on in a protocol. This is not limited in this application.

In the embodiments of this application, in a case of different PRACH transmissions, the terminal device determines the quantity of transmissions of the to-be-performed PRACH transmission and the transmit power of the to-be-performed PRACH transmission in different manners. A processing manner of the terminal device is more flexible and is applicable to different PRACH transmission scenarios.

In an optional embodiment, before determining whether the to-be-performed PRACH transmission is the first PRACH transmission, the terminal device determines the to-be-performed PRACH transmission as the multiple PRACH transmissions or the single PRACH transmission based on a trigger condition, where the trigger condition includes at least one threshold for triggering the PRACH transmission.

Exemplarily, the trigger condition is used for representing that an RSRP value of a downlink reference signal measured by the terminal satisfies a requirement of an RSRP threshold for triggering the PRACH transmission. The trigger condition includes an RSRP threshold for triggering a current PRACH transmission.

It should be understood that, the trigger condition may be sent by the network device to the terminal device, or may be agreed on in a protocol. This is not limited in this application.

In an optional embodiment, that the terminal device determines the to-be-performed PRACH transmission as the multiple PRACH transmissions or the single PRACH transmission based on a trigger condition includes: the terminal device determines the to-be-performed PRACH transmission as the multiple PRACH transmissions in a case that the RSRP is less than or equal to a second threshold.

In an optional embodiment, the terminal device determines the to-be-performed PRACH transmission as the single PRACH transmission in a case that the RSRP is greater than the second threshold.

In an optional embodiment, the terminal device determines a sum of a power increment value and the transmit power of the single PRACH transmission as the transmit power of the to-be-performed PRACH transmission in a case that the RSRP is greater than the second threshold and is less than or equal to a third threshold.

It should be understood that, there may be two thresholds for triggering the PRACH transmission, namely, the foregoing second threshold and the third threshold. The second threshold is less than the third threshold. In a case that the RSRP is greater than the second threshold and is less than or equal to the third threshold, the to-be-performed PRACH transmission is still the single PRACH transmission. In this case, the terminal device needs to increase the power, to extend a coverage range of the to-be-performed PRACH transmission.

In the foregoing process, the terminal device may calculate a third difference between the RSRP and the third threshold, then determine the power increment value based on the third difference, and determine the sum of the transmit power of the single PRACH transmission and the power increment value as the transmit power of the to-be-performed PRACH transmission. The terminal device may determine the power increment value in multiple manners.

In a possible implementation, the terminal device may determine the power increment value based on the third difference and a sixth correspondence. The sixth correspondence includes a correspondence between at least one difference and at least one power increment value. Exemplarily, the foregoing sixth correspondence may be shown in Table 8. When the third difference is 5, it may be obtained, through table lookup, that the power increment value is 2 dBm.

**Table 8**

| Difference | Power increment value |
|---|---|
| 5 | 2 dBm |
| 10 | 4 dBm |
| 15 | 6 dBm |

In another possible implementation, the terminal device may directly determine the third difference as the power increment value.

In the embodiments of this application, multiple thresholds are set during the single PRACH transmission, so that transmit powers of the PRACH transmission that are determined by the terminal device are different under different thresholds. In this way, the terminal device may more properly determine the transmit power of the to-be-performed PRACH transmission, and the determined transmit power is more applicable to a current corresponding scenario. While random access efficiency of the terminal device is improved and uplink coverage of the terminal device is enhanced, power consumption can be reduced.

In an optional embodiment, in a multi-band scenario, before determining whether the to-be-performed PRACH transmission is the first PRACH transmission, the terminal device determines the to-be-performed PRACH transmission as the multiple PRACH transmissions or the single PRACH transmission based on a trigger condition and a band offset value, where the trigger condition includes at least one threshold for triggering the PRACH transmission.

It should be understood that, the band offset value may be sent by the network device to the terminal device, or may be agreed on in a protocol. This is not limited in this application.

In an optional embodiment, in the multi-band scenario, that the terminal device determines the to-be-performed PRACH transmission as the multiple PRACH transmissions or the single PRACH transmission based on a trigger condition includes: the terminal device determines the to-be-performed PRACH transmission as the multiple PRACH transmissions in a case that a sum of an RSRP of the target band and the band offset value of the target band is less than or equal to the second threshold.

In an optional embodiment, in the multi-band scenario, the terminal device determines the to-be-performed PRACH transmission as the single PRACH transmission in a case that the sum of the RSRP of the target band and the band offset value of the target band is greater than the second threshold.

In an optional embodiment, in the multi-band scenario, the terminal device determines a sum of a power increment value and the transmit power of the single PRACH transmission as the transmit power of the to-be-performed PRACH transmission in a case that the sum of the RSRP of the target band and the band offset value of the target band is greater than the second threshold and is less than or equal to a third threshold.

Specifically, first, the terminal device determines a value obtained through subtracting the first threshold from the sum of the RSRP of the target band and the band offset value of the target band as a fourth difference. Then, the terminal device determines the power increment value based on the fourth difference. Finally, the terminal device determines the sum of the transmit power of the single PRACH transmission and the power increment value as the transmit power of the to-be-performed PRACH transmission.

It should be understood that, a manner in which the terminal device determines the power increment value based on the fourth difference is the same as the foregoing manner in which the terminal device determines the power increment value based on the third difference. Details are not described herein again.

It should be understood that, the first correspondence to the sixth correspondence in the embodiments of this application may specifically be in forms of tables, formulas, or the like. This is not limited in this application. It should be further understood that, the first correspondence to the sixth correspondence in the embodiments of this application may be sent by the network device to the terminal device, or may be agreed on in a protocol. This is not limited in this application.

FIG. 4 is a schematic flowchart of another signal transmission method 400 according to an embodiment of this application. The method 400 may be applied to the communication system 100 shown in FIG. 1, but the embodiments of this application are not limited thereto. In an optional embodiment, before a terminal device determines whether to trigger a single PRACH transmission or multiple PRACH transmissions, this embodiment of this application further includes the method 400. As shown in FIG. 4, the method 400 may include the following steps.

S401: A network device sends a synchronization signal and PBCH block (synchronization signal and PBCH block, SSB) to the terminal device. Correspondingly, the terminal device receives the SSB.

S402: The terminal device performs measurement on a signal in the SSB, to obtain an RSRP.

S403: The network device sends a trigger condition to the terminal device. Correspondingly, the terminal device receives the trigger condition.

The terminal device may determine a to-be-performed PRACH transmission as a single PRACH transmission or multiple PRACH transmissions based on the trigger condition, and determine a quantity of transmissions of the to-be-performed PRACH transmission and a transmit power of the to-be-performed PRACH transmission according to different PRACH transmission scenarios in different manners.

Exemplarily, the network device may send a system information broadcast (system information broadcast, SIB) message or RRC signaling to the terminal device. The SIB message or the RRC signaling carries the trigger condition.

Optionally, in a multi-band scenario, the network device may further send a band offset value to the terminal device. Correspondingly, the terminal device receives the band offset value, determines a quantity of offset transmissions of a target band and a transmit power offset value of the target band based on the band offset value, and further determines the quantity of transmissions of the to-be-performed PRACH transmission and the transmit power of the to-be-performed PRACH transmission based on a quantity of transmissions of a reference band, a transmit power of the reference band, the quantity of offset transmissions of the target band, and the transmit power offset value of the target band.

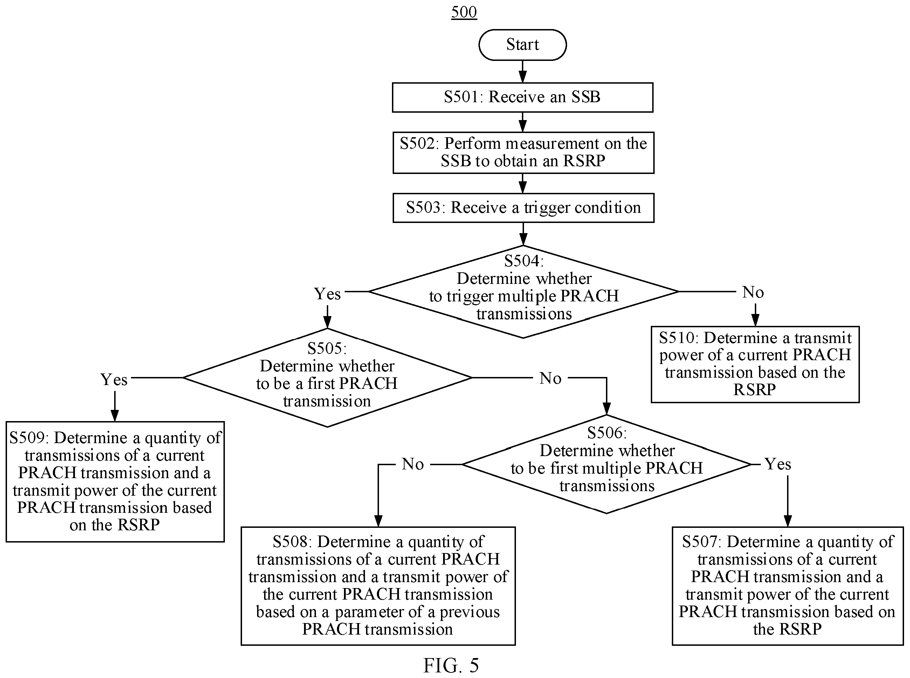

FIG. 5 is a schematic flowchart of still another signal transmission method 500 according to an embodiment of this application. The method 500 may be applied to the terminal device in the communication system 100 shown in FIG. 1, but the embodiments of this application are not limited thereto. As shown in FIG. 5, the method 500 may include the following steps.

S501: A terminal device receives an SSB signal sent by a network device.

S502: The terminal device performs measurement on the SSB to obtain an RSRP.

S503: The terminal device receives a trigger condition.

S504: The terminal device determines, based on the RSRP and the trigger condition, whether to trigger multiple PRACH transmissions.

Specifically, a manner of determining, based on the RSRP and the trigger condition, whether to trigger multiple PRACH transmissions is the same as the foregoing manner of determining, based on the RSRP and the trigger condition, that multiple PRACH transmissions are triggered. Details are not described herein again.

S505: In a case that the multiple PRACH transmissions are triggered for a to-be-performed PRACH transmission, the terminal device determines whether the to-be-performed PRACH transmission is a first PRACH transmission.

Specifically, a manner in which the terminal device determines whether the to-be-performed PRACH transmission is the first PRACH transmission is the same as the foregoing manner of determining whether the to-be-performed PRACH transmission is the first PRACH transmission.

S506: In a case that the to-be-performed PRACH transmission is not the first PRACH transmission, the terminal device determines whether the to-be-performed PRACH transmission is first multiple PRACH transmissions.

Specifically, a manner in which the terminal device determines whether the to-be-performed PRACH transmission is the first multiple PRACH transmissions is the same as the foregoing manner of determining whether the to-be-performed PRACH transmission is the first multiple PRACH transmissions. Details are not described herein again.

S507: In a case that the to-be-performed PRACH transmission is the first multiple PRACH transmissions, the terminal device determines a quantity of transmissions of the to-be-performed PRACH transmission and a transmit power of the to-be-performed PRACH transmission based on the RSRP, and initiates multiple PRACH transmissions to the network device.

It should be understood that, a manner in which the terminal device determines the quantity of transmissions of the to-be-performed PRACH transmission and the transmit power of the to-be-performed PRACH transmission based on the RSRP is the same as a manner of determining the quantity of transmissions of the to-be-performed PRACH transmission and the transmit power of the to-be-performed PRACH transmission in the foregoing single-band PRACH transmission scenario. Details are not described herein again.

S508: In a case that the to-be-performed PRACH transmission is not the first multiple PRACH transmissions, the terminal device determines the quantity of transmissions of the to-be-performed PRACH transmission and the transmit power of the to-be-performed PRACH transmission based on a quantity of transmissions of a previous PRACH transmission and a transmit power of the previous PRACH transmission.

It should be understood that, a manner in which the terminal device determines the quantity of transmissions of the to-be-performed PRACH transmission and the transmit power of the to-be-performed PRACH transmission based on the quantity of transmissions of the previous PRACH transmission and the transmit power of the previous PRACH transmission is the same as a manner of determining the quantity of transmissions of the to-be-performed PRACH transmission and the transmit power of the to-be-performed PRACH transmission based on the quantity of transmissions of the previous PRACH transmission and the transmit power of the previous PRACH transmission in the foregoing single-band PRACH transmission scenario. Details are not described herein again.

S509: In a case that the to-be-performed PRACH transmission is the first PRACH transmission, the terminal device determines the quantity of transmissions of the to-be-performed PRACH transmission and the transmit power of the to-be-performed PRACH transmission based on the RSRP, and initiates the PRACH transmission to the network device.

It should be understood that, a manner in which the terminal device determines the quantity of transmissions of the to-be-performed PRACH transmission and the transmit power of the to-be-performed PRACH transmission based on the RSRP is the same as a manner of determining the quantity of transmissions of the to-be-performed PRACH transmission and the transmit power of the to-be-performed PRACH transmission based on the RSRP in the foregoing single-band PRACH transmission scenario. Details are not described herein again.

S510: In a case that a single PRACH transmission is triggered for the to-be-performed PRACH transmission, the terminal device determines the quantity of transmissions of the to-be-performed PRACH transmission and the transmit power of the to-be-performed PRACH transmission based on the RSRP.

It should be understood that, a manner in which the terminal device determines the transmit power of the to-be-performed PRACH transmission based on the RSRP is the same as the foregoing manner of determining the transmit power of the single PRACH transmission. Details are not described herein again.

It should be understood that, sequence numbers of the foregoing processes do not indicate an execution sequence, and an execution sequence of processes should be determined based on functions and internal logic of the processes, and should not be construed as any limitation on implementation processes of the embodiments of this application.

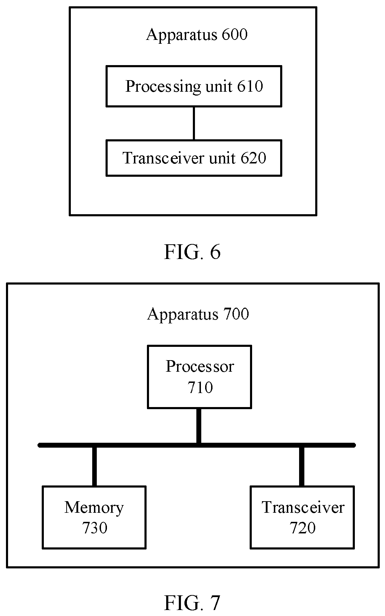

The signal transmission method according to the embodiments of this application is described in detail above with reference to FIG. 1 to FIG. 5. A signal transmission apparatus according to an embodiment of this application is described in detail below with reference to FIG. 6 and FIG. 7.

FIG. 6 shows an apparatus 600 according to an embodiment of this application. The apparatus 600 may be a terminal device, or may be an apparatus that can support a terminal device to implement a function thereof, for example, may be a chip or a chip system that can be used in a terminal device. The apparatus 600 includes a processing unit 610 and a transceiver unit 620.

The processing unit 610 is configured to: determine, before triggering a physical random access channel PRACH transmission, whether a to-be-performed PRACH transmission is a first PRACH transmission; and determine, in a case that the to-be-performed PRACH transmission is not the first PRACH transmission, whether the to-be-performed PRACH transmission is first multiple PRACH transmissions. The transceiver unit 620 is configured to: initiate, in a case that the to-be-performed PRACH transmission is the first multiple PRACH transmissions, multiple PRACH transmissions to a network device based on a quantity of transmissions of the to-be-performed PRACH transmission and a transmit power of the to-be-performed PRACH transmission, where the quantity of transmissions of the to-be-performed PRACH transmission and the transmit power of the to-be-performed PRACH transmission are determined based on a reference signal receiving power RSRP.

Optionally, the processing unit 610 is further configured to: initiate, in a case that the to-be-performed PRACH transmission is the first PRACH transmission, the PRACH transmission to the network device based on the quantity of transmissions of the to-be-performed PRACH transmission and the transmit power of the to-be-performed PRACH transmission, where the quantity of transmissions of the to-be-performed PRACH transmission and the transmit power of the to-be-performed PRACH transmission are determined based on the RSRP.

Optionally, the processing unit 610 is further configured to: determine the quantity of transmissions of the to-be-performed PRACH transmission based on the RSRP and a first correspondence, where the first correspondence includes a correspondence between at least one RSRP value and at least one quantity of transmissions.

Optionally, the processing unit 610 is further configured to: calculate a first difference between the RSRP and a first threshold. The terminal device determines a transmit power offset value of the to-be-performed PRACH transmission based on the first difference and a second correspondence, where the second correspondence includes a correspondence between at least one difference and at least one transmit power offset value; and the terminal device determines a sum of the transmit power offset value of the to-be-performed PRACH transmission and a transmit power of a single PRACH transmission as the transmit power of the to-be-performed PRACH transmission.

Optionally, the processing unit 610 is further configured to: determine a band offset value of a target band based on the target band; determine a quantity of offset transmissions of the to-be-performed PRACH transmission based on the band offset value of the target band and a third correspondence, where the third correspondence includes a correspondence between at least one band offset value and at least one quantity of offset transmissions; and determine a sum of a quantity of transmissions of a reference band and the quantity of offset transmissions of the to-be-performed PRACH transmission as the quantity of transmissions of the to-be-performed PRACH transmission.

Optionally, in a multi-band PRACH transmission scenario, the processing unit 610 is further configured to: determine the quantity of offset transmissions of the to-be-performed PRACH transmission based on the target band and a fourth correspondence, where the fourth correspondence includes a correspondence between at least one frequency band and at least one quantity of offset transmissions; and determine the sum of the quantity of transmissions of the reference band and the quantity of offset transmissions of the to-be-performed PRACH transmission as the quantity of transmissions of the to-be-performed PRACH transmission.

Optionally, in the multi-band PRACH transmission scenario, the processing unit 610 is further configured to: determine the band offset value of the target band based on the target band; determine a value obtained through subtracting the first threshold from a sum of the RSRP and the band offset value of the target band as a second difference; determine a transmit power offset value of the to-be-performed PRACH transmission based on the second difference and a fifth correspondence, where the fifth correspondence includes a correspondence between at least one difference and at least one transmit power offset value; and determine a sum of the transmit power offset value of the to-be-performed PRACH transmission and a transmit power of a single PRACH transmission as the transmit power of the to-be-performed PRACH transmission.

Optionally, the processing unit 610 is further configured to: obtain a quantity of transmissions of a previous PRACH transmission and a transmit power of the previous PRACH transmission; determine the quantity of transmissions of the to-be-performed PRACH transmission based on the quantity of transmissions of the previous PRACH transmission; and determine the transmit power of the to-be-performed PRACH transmission based on the transmit power of the previous PRACH transmission; and the transceiver unit is further configured to: initiate the PRACH transmission to the network device based on the quantity of transmissions of the to-be-performed PRACH transmission and the transmit power of the to-be-performed PRACH transmission.

Optionally, the processing unit 610 is further configured to: determine the to-be-performed PRACH transmission as the multiple PRACH transmissions or the single PRACH transmission based on a trigger condition, where the trigger condition includes at least one threshold for triggering the PRACH transmission.

Optionally, the to-be-performed PRACH transmission is the multiple PRACH transmissions in a case that the RSRP is less than or equal to a second threshold.

Optionally, the to-be-performed PRACH transmission is the single PRACH transmission in a case that the RSRP is greater than the second threshold.

Optionally, the processing unit 610 is further configured to: determine a sum of a power increment value and the transmit power of the single PRACH transmission as the transmit power of the to-be-performed PRACH transmission in a case that the RSRP is greater than the second threshold and is less than or equal to a third threshold.

Optionally, in the multi-band PRACH transmission scenario, the processing unit 610 is further configured to: determine the band offset value of the target band based on the target band; and determine the to-be-performed PRACH transmission as the multiple PRACH transmissions or the single PRACH transmission based on a trigger condition and the band offset value of the target band, where the trigger condition includes at least one threshold for triggering the PRACH transmission.

Optionally, the trigger condition is sent by the network device to the apparatus, or is agreed on in a protocol.

Optionally, the processing unit 610 is further configured to: receive a synchronization signal block SSB from the network device; and perform measurement on the SSB, to obtain the RSRP.

Optionally, the to-be-performed PRACH transmission is the multiple PRACH transmissions in a case that a sum of the RSRP and the band offset value of the target band is less than or equal to a second threshold.

Optionally, the to-be-performed PRACH transmission is the single PRACH transmission in a case that the sum of the RSRP and the band offset value of the target band is greater than the second threshold.

Optionally, in the multi-band PRACH transmission scenario, the processing unit 610 is further configured to: determine a sum of a power increment value and the transmit power of the single PRACH transmission as the transmit power of the to-be-performed PRACH transmission in a case that the sum of the RSRP and the band offset value of the target band is greater than the second threshold and is less than or equal to a third threshold.

Optionally, the band offset value of the target band is sent by the network device to the apparatus, or is agreed on in a protocol.

It should be understood that the apparatus 600 herein is represented in a form of a functional unit. The term "unit" herein may be an application specific integrated circuit (application specific integrated circuit, ASIC), an electronic circuit, a processor (for example, a shared processor, a dedicated processor, or a packet processor) configured to execute one or more software or firmware programs, a memory, a combined logical circuit, and/or another suitable component that supports the described functions. In an optional example, a person skilled in the art may understand that the apparatus 600 may be specifically the terminal device in the foregoing embodiments and may be configured to perform the procedures and/or the steps corresponding to the terminal device in the foregoing method embodiments. To avoid repetition, details are not described herein again.

The apparatus 600 in the foregoing solutions have a function of implementing a corresponding step performed by the terminal device in the foregoing method. The function may be implemented by using hardware, or may be implemented by using hardware executing corresponding software. The hardware or software includes one or more modules corresponding to the foregoing function. For example, the transceiver unit may specifically include a receiving unit and a sending unit. The receiving unit and/or the sending unit may be replaced by a transceiver (for example, the sending unit may be replaced by a transmitter, and the receiving unit may be replaced by a receiver), and another unit such as the processing unit may be replaced by a processor. The units respectively perform sending and receiving operations and relative processing operations in the method embodiments.

In addition, the foregoing transceiver unit may further be a transceiver circuit (for example, may include a receiving circuit and a sending circuit), and the processing unit may be a processing circuit. In this embodiment of this application, the apparatus in FIG. 6 may be the terminal device in the foregoing embodiment, or may be a chip or a chip system, for example, a system on chip (system on chip, SoC). The transceiver unit may be an input/output circuit, and a communication interface. The processing unit is a processor or a microprocessor or an integrated circuit integrated on the chip. This is not limited herein.

FIG. 7 shows another signal transmission apparatus 700 according to an embodiment of this application. The apparatus 700 includes a processor 710, a transceiver 720, and a memory 730. The processor 710, the transceiver 720, and the memory 730 communicate with each other by using an internal connection path. The memory 730 is configured to store instructions. The processor 710 is configured to execute the instructions stored in the memory 730, to control the transceiver 720 to send a signal and/or receive a signal.

It should be understood that the apparatus 700 may be specifically the terminal device in the foregoing embodiments, and may be configured to perform the steps and/or the procedures of the terminal device in the foregoing method embodiments. Optionally, the memory 730 may include a read-only memory and a random access memory, and provide the instructions and data to the processor. A part of the memory may further include a non-volatile random access memory. For example, the memory may further store device type information. The processor 710 may be configured to execute the instructions stored in the memory, and when the processor 710 executes the instructions stored in the memory, the processor 710 is configured to perform the steps and/or the procedures in the foregoing method embodiments corresponding to the first terminal device or the network device. The transceiver 720 may include a transmitter and a receiver, the transmitter may be configured to implement the steps and/or the procedures that correspond to the foregoing transceiver and are used for performing a sending action, and the receiver may be configured to implement the steps and/or the procedures that correspond to the foregoing transceiver and are used for performing a receiving action.

It should be understood that, in this embodiment of this application, the processor of the foregoing apparatus may be a central processing unit (central processing unit, CPU), or the processor may be another general-purpose processor, a digital signal processor (DSP), an application-specific integrated circuit (ASIC), a field programmable gate array (FPGA), or another programmable logic device, discrete gate or transistor logic device, discrete hardware component, or the like. The general-purpose processor may be a microprocessor, or the processor may be any conventional processor or the like.

In an implementation process, the steps of the foregoing method may be completed by using an integrated logic circuit of hardware or instructions in a form of software in the processor. The steps of the method disclosed with reference to the embodiments of this application may be directly performed by a hardware processor, or may be performed by using a combination of hardware and a software unit in the processor. The software unit may be located in a mature storage medium in the art, such as a random access memory, a flash memory, a read-only memory, a programmable read-only memory, an electrically erasable programmable memory, a register, or the like. The storage medium is located in the memory, and the processor executes the instructions in the memory and completes the steps of the foregoing method in combination with hardware of the processor. To avoid repetition, details are not described herein again.

An embodiment of this application further provides a communication system. The communication system may include the foregoing terminal device and the foregoing network device.

According to the method provided in the embodiments of this application, this application further provides a computer-readable storage medium. The computer-readable storage medium is configured to store a computer program, and the computer program is configured to implement the steps or procedures performed by the terminal device in the foregoing embodiments.

According to the method provided in the embodiments of this application, this application further provides a computer program product. The computer program product includes a computer program (which may also be referred to as code or instructions), and when the computer program is run on a computer, the computer may perform the steps or procedures performed by the terminal device in the foregoing embodiments.

A person of ordinary skill in the art may be aware that, the method steps and units described with reference to the embodiments disclosed in this specification can be implemented with electronic hardware, computer software, or a combination of the electronic hardware and the computer software. To clearly describe interchangeability between the hardware and the software, steps and compositions of each embodiment have been generally described according to functions in the foregoing descriptions. Whether the functions are executed by hardware or software depends on particular applications and design constraint conditions of the technical solutions. A person of ordinary skill in the art may use different methods to implement the described functions for each particular application, but it should not be considered that the implementation goes beyond the scope of this application.

A person skilled in the art may clearly understand that, for the purpose of convenient and brief description, for a detailed working process of the foregoing described system, apparatus, and unit, reference may be made to the corresponding process in the foregoing method embodiments, and details are not described herein again.

In the several embodiments provided in this application, it should be understood that the disclosed system, apparatus, and method may be implemented in other manners. For example, the described apparatus embodiments are only exemplary. For example, the division of the units is only a logical function division and may be another division during actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate. Parts displayed as units may or may not be physical units, and may be located in one position, or may be distributed on multiple network units. Some or all of the units may be selected according to an actual requirement to achieve the objectives of the solutions in the embodiments of this application.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium, and includes several instructions for causing a computer device (which may be a personal computer, a server, a network device, or the like) to perform all or some of the steps of the methods described in the embodiments of this application. The foregoing storage medium includes: any medium that can store program code, such as a USB flash disk, a removable hard disk, a read-only memory (read-only memory, ROM), a random access memory (random access memory, RAM), a magnetic disk, or an optical disc.

## Claims

1. A signal transmission method, comprising:
determining (S301), by a terminal device, before performing a physical random access channel PRACH transmission, whether a to-be-performed PRACH transmission is a first PRACH transmission;
determining (S302), by the terminal device, in a case that the to-be-performed PRACH transmission is not the first PRACH transmission, whether the to-be-performed PRACH transmission is first multiple PRACH transmissions; and
**characterized by** initiating (S303), by the terminal device, in a case that the to-be-performed PRACH transmission is the first multiple PRACH transmissions, multiple PRACH transmissions to a network device based on a quantity of transmissions of the to-be-performed PRACH transmission and a transmit power of the to-be-performed PRACH transmission, wherein the quantity of transmissions of the to-be-performed PRACH transmission and the transmit power of the to-be-performed PRACH transmission are determined by the terminal device based on a reference signal receiving power RSRP;
wherein in a multi-band PRACH transmission scenario, in a case that the to-be-performed PRACH transmission is the first multiple PRACH transmissions, the method further comprises:
determining, by the terminal device, a band offset value of a target band based on the target band;
determining, by the terminal device, a quantity of offset transmissions of the to-be-performed PRACH transmission based on the band offset value of the target band and a third correspondence, wherein the third correspondence comprises a correspondence between at least one band offset value and at least one quantity of offset transmissions; and
determining, by the terminal device, a sum of a quantity of transmissions of a reference band and the quantity of offset transmissions of the to-be-performed PRACH transmission as the quantity of transmissions of the to-be-performed PRACH transmission.

2. The method according to claim 1, wherein the method further comprises:
initiating, by the terminal device, in a case that the to-be-performed PRACH transmission is the first PRACH transmission, the PRACH transmission to the network device based on the quantity of transmissions of the to-be-performed PRACH transmission and the transmit power of the to-be-performed PRACH transmission, wherein the quantity of transmissions of the to-be-performed PRACH transmission and the transmit power of the to-be-performed PRACH transmission are determined by the terminal device based on the RSRP.

3. The method according to any one of claim 1 or 2, wherein in the multi-band PRACH transmission scenario, in a case that the to-be-performed PRACH transmission is the multiple PRACH transmissions, the method further comprises:
determining, by the terminal device, the quantity of offset transmissions of the to-be-performed PRACH transmission based on the target band and a fourth correspondence, wherein the fourth correspondence comprises a correspondence between at least one band and at least one quantity of offset transmissions; and
determining, by the terminal device, the sum of the quantity of transmissions of the reference band and the quantity of offset transmissions of the to-be-performed PRACH transmission as the quantity of transmissions of the to-be-performed PRACH transmission.

4. The method according to any one of claim 1 to 3, wherein in the multi-band PRACH transmission scenario, in a case that the to-be-performed PRACH transmission is the first PRACH transmission or the first multiple PRACH transmissions, the method further comprises:
determining, by the terminal device, the band offset value of the target band based on the target band;
determining, by the terminal device, a value obtained through subtracting the first threshold from a sum of the RSRP and the band offset value of the target band as a second difference;
determining, by the terminal device, a transmit power offset value of the to-be-performed PRACH transmission based on the second difference and a fifth correspondence, wherein the fifth correspondence comprises a correspondence between at least one difference and at least one transmit power offset value; and
determining, by the terminal device, a sum of the transmit power offset value of the to-be-performed PRACH transmission and a transmit power of a single PRACH transmission as the transmit power of the to-be-performed PRACH transmission.

5. The method according to any one of claims 1 to 4, wherein the method further comprises:
obtaining, by the terminal device, a quantity of transmissions of a previous PRACH transmission and a transmit power of the previous PRACH transmission in a case that the to-be-performed PRACH transmission is not the first multiple PRACH transmissions;
determining, by the terminal device, the quantity of transmissions of the to-be-performed PRACH transmission based on the quantity of transmissions of the previous PRACH transmission;
determining, by the terminal device, the transmit power of the to-be-performed PRACH transmission based on the transmit power of the previous PRACH transmission; and
initiating, by the terminal device, the PRACH transmission to the network device based on the quantity of transmissions of the to-be-performed PRACH transmission and the transmit power of the to-be-performed PRACH transmission.

6. The method according to any one of claims 1 to 5, wherein before the determining whether a to-be-performed PRACH transmission is a first PRACH transmission, the method further comprises:
determining, by the terminal device, the to-be-performed PRACH transmission as the multiple PRACH transmissions or the single PRACH transmission based on a trigger condition, wherein the trigger condition comprises at least one threshold for triggering the PRACH transmission.

7. The method according to claim 6, wherein
the to-be-performed PRACH transmission is the multiple PRACH transmissions in a case that the RSRP is less than or equal to a second threshold; or
the to-be-performed PRACH transmission is the single PRACH transmission in a case that the RSRP is greater than the second threshold.

8. The method according to claim 7, wherein the method further comprises:
determining, by the terminal device, a sum of a power increment value and the transmit power of the single PRACH transmission as the transmit power of the to-be-performed PRACH transmission in a case that the RSRP is greater than the second threshold and is less than or equal to a third threshold.

9. The method according to any one of claims 1 to 5, wherein in the multi-band PRACH transmission scenario, before the determining whether a to-be-performed PRACH transmission is a first PRACH transmission, the method further comprises:
determining, by the terminal device, the band offset value of the target band based on the target band; and
determining, by the terminal device, the to-be-performed PRACH transmission as the multiple PRACH transmissions or the single PRACH transmission based on a trigger condition and the band offset value of the target band, wherein the trigger condition comprises at least one threshold for triggering the PRACH transmission.

10. The method according to claim 9, wherein the to-be-performed PRACH transmission is the multiple PRACH transmissions in a case that a sum of the RSRP and the band offset value of the target band is less than or equal to a second threshold.

11. The method according to claim 10, wherein the to-be-performed PRACH transmission is the single PRACH transmission in a case that the sum of the RSRP and the band offset value of the target band is greater than the second threshold.

12. The method according to claim 11, wherein the method further comprises:
determining, by the terminal device, a sum of a power increment value and the transmit power of the single PRACH transmission as the transmit power of the to-be-performed PRACH transmission in a case that the sum of the RSRP and the band offset value of the target band is greater than the second threshold and is less than or equal to a third threshold.

## Patentansprüche

1. Signalübertragungsverfahren, umfassend:
Bestimmen (S301) durch ein Endgerät vor der Durchführung einer physikalischen Direktzugriffskanal- (PRACH-) Übertragung, ob eine durchzuführende PRACH-Übertragung eine erste PRACH-Übertragung ist;
Bestimmen (S302) durch das Endgerät, für den Fall, dass die durchzuführende PRACH-Übertragung nicht die erste PRACH-Übertragung ist, ob die durchzuführende PRACH-Übertragung eine erste von mehreren PRACH-Übertragungen ist; und
**gekennzeichnet durch** das Initiieren (S303) durch das Endgerät, für den Fall, dass die durchzuführende PRACH-Übertragung die erste von mehreren PRACH-Übertragungen ist, von mehreren PRACH-Übertragungen an eine Netzwerkeinrichtung basierend auf einer Anzahl von Übertragungen der durchzuführenden PRACH-Übertragung und einer Sendeleistung der durchzuführenden PRACH-Übertragung, wobei die Anzahl der Übertragungen der durchzuführenden PRACH-Übertragung und die Sendeleistung der durchzuführenden PRACH-Übertragung durch das Endgerät basierend auf einer Referenzsignalempfangsleistung (RSRP) bestimmt werden;
wobei in einem Multi-Band-PRACH-Übertragungsszenario, für den Fall, dass die durchzuführende PRACH-Übertragung die erste von mehreren PRACH-Übertragungen ist, das Verfahren ferner umfasst:
Bestimmen eines Band-Offset-Werts eines Zielbandes durch das Endgerät basierend auf dem Zielband;
Bestimmen einer Anzahl von Offset-Übertragungen der durchzuführenden PRACH-Übertragung durch das Endgerät basierend auf dem Band-Offset-Wert des Zielbandes und einer dritten Entsprechung, wobei die dritte Entsprechung eine Entsprechung zwischen mindestens einem Band-Offset-Wert und mindestens einer Anzahl von Offset-Übertragungen umfasst; und
Bestimmen einer Summe aus einer Anzahl von Übertragungen eines Referenzbandes und der Anzahl der Offset-Übertragungen der durchzuführenden PRACH-Übertragung durch das Endgerät als die Anzahl der Übertragungen der durchzuführenden PRACH-Übertragung.

2. Verfahren nach Anspruch 1, wobei das Verfahren ferner umfasst:
Initiieren der PRACH-Übertragung durch das Endgerät an die Netzwerkeinrichtung, für den Fall, dass die durchzuführende PRACH-Übertragung die erste PRACH-Übertragung ist, basierend auf der Anzahl der Übertragungen der durchzuführenden PRACH-Übertragung und der Sendeleistung der durchzuführenden PRACH-Übertragung, wobei die Anzahl der Übertragungen der durchzuführenden PRACH-Übertragung und die Sendeleistung der durchzuführenden PRACH-Übertragung durch das Endgerät basierend auf der RSRP bestimmt werden.

3. Verfahren nach einem der Ansprüche 1 oder 2, wobei im Szenario der Mehrband-PRACH-Übertragung, falls die durchzuführende PRACH-Übertragung die mehreren PRACH-Übertragungen ist, das Verfahren ferner umfasst:
Bestimmen, durch das Endgerät, der Anzahl an Offset-Übertragungen der durchzuführenden PRACH-Übertragung basierend auf dem Zielband und einer vierten Entsprechung, wobei die vierte Entsprechung eine Entsprechung zwischen mindestens einem Band und mindestens einer Anzahl an Offset-Übertragungen umfasst; und
Bestimmen, durch das Endgerät, der Summe aus der Anzahl der Übertragungen des Referenzbandes und der Anzahl an Offset-Übertragungen der durchzuführenden PRACH-Übertragung als die Anzahl der Übertragungen der durchzuführenden PRACH-Übertragung.

4. Verfahren nach einem der Ansprüche 1 bis 3, wobei im Szenario der Mehrband-PRACH-Übertragung, falls die durchzuführende PRACH-Übertragung die erste PRACH-Übertragung oder die ersten mehreren PRACH-Übertragungen ist, das Verfahren ferner umfasst:
Bestimmen, durch das Endgerät, des Band-Offset-Werts des Zielbandes basierend auf dem Zielband;
Bestimmen, durch das Endgerät, eines Wertes, der durch Subtraktion des ersten Schwellenwerts von einer Summe aus dem RSRP und dem Band-Offset-Wert des Zielbandes erhalten wird, als eine zweite Differenz;
Bestimmen, durch das Endgerät, eines Sendeleistungs-Offset-Werts der durchzuführenden PRACH-Übertragung basierend auf der zweiten Differenz und einer fünften Entsprechung, wobei die fünfte Entsprechung eine Entsprechung zwischen mindestens einer Differenz und mindestens einem Sendeleistungs-Offset-Wert umfasst; und
Bestimmen, durch das Endgerät, einer Summe aus dem Sendeleistungs-Offset-Wert der durchzuführenden PRACH-Übertragung und einer Sendeleistung einer einzelnen PRACH-Übertragung als die Sendeleistung der durchzuführenden PRACH-Übertragung.

5. Verfahren nach einem der Ansprüche 1 bis 4, wobei das Verfahren ferner umfasst:
Erhalten, durch das Endgerät, einer Anzahl an Übertragungen einer vorherigen PRACH-Übertragung und einer Sendeleistung der vorherigen PRACH-Übertragung in einem Fall, dass die durchzuführende PRACH-Übertragung nicht die ersten mehreren PRACH-Übertragungen ist;
Bestimmen, durch das Endgerät, der Anzahl der Übertragungen der durchzuführenden PRACH-Übertragung basierend auf der Anzahl der Übertragungen der vorherigen PRACH-Übertragung;
Bestimmen, durch das Endgerät, der Sendeleistung der durchzuführenden PRACH-Übertragung basierend auf der Sendeleistung der vorherigen PRACH-Übertragung; und
Einleiten der PRACH-Übertragung an das Netzwerkgerät durch das Endgerät basierend auf der Anzahl der Übertragungen der durchzuführenden PRACH-Übertragung und der Sendeleistung der durchzuführenden PRACH-Übertragung.

6. Verfahren nach einem der Ansprüche 1 bis 5, wobei das Verfahren vor dem Bestimmen, ob eine durchzuführende PRACH-Übertragung eine erste PRACH-Übertragung ist, ferner umfasst:
Bestimmen der durchzuführenden PRACH-Übertragung als die mehrfache PRACH-Übertragung oder die einzelne PRACH-Übertragung durch das Endgerät basierend auf einer Auslösebedingung, wobei die Auslösebedingung mindestens einen Schwellenwert zum Auslösen der PRACH-Übertragung umfasst.

7. Verfahren nach Anspruch 6, wobei
die durchzuführende PRACH-Übertragung die mehrfache PRACH-Übertragung ist, falls der RSRP kleiner oder gleich einem zweiten Schwellenwert ist; oder
die durchzuführende PRACH-Übertragung die einzelne PRACH-Übertragung ist, falls der RSRP größer als der zweite Schwellenwert ist.

8. Verfahren nach Anspruch 7, wobei das Verfahren ferner umfasst:
Bestimmen einer Summe aus einem Leistungserhöhungswert und der Sendeleistung der einzelnen PRACH-Übertragung als die Sendeleistung der durchzuführenden PRACH-Übertragung durch das Endgerät, falls der RSRP größer als der zweite Schwellenwert und kleiner oder gleich einem dritten Schwellenwert ist.

9. Verfahren nach einem der Ansprüche 1 bis 5, wobei in dem Multi-Band-PRACH-Übertragungsszenario vor dem Bestimmen, ob eine durchzuführende PRACH-Übertragung eine erste PRACH-Übertragung ist, das Verfahren ferner umfasst:
Bestimmen des Band-Offset-Werts des Zielbands basierend auf dem Zielband durch das Endgerät; und
Bestimmen der durchzuführenden PRACH-Übertragung als die mehrfache PRACH-Übertragung oder die einzelne PRACH-Übertragung durch das Endgerät basierend auf einer Auslösebedingung und dem Band-Offset-Wert des Zielbands, wobei die Auslösebedingung mindestens einen Schwellenwert zum Auslösen der PRACH-Übertragung umfasst.

10. Verfahren nach Anspruch 9, wobei die durchzuführende PRACH-Übertragung die mehrfache PRACH-Übertragung ist, falls eine Summe aus dem RSRP und dem Band-Offset-Wert des Zielbands kleiner oder gleich einem zweiten Schwellenwert ist.

11. Verfahren nach Anspruch 10, wobei die durchzuführende PRACH-Übertragung die einzelne PRACH-Übertragung ist, falls die Summe aus dem RSRP und dem Band-Offset-Wert des Zielbands größer als der zweite Schwellenwert ist.

12. Verfahren nach Anspruch 11, wobei das Verfahren ferner umfasst:
Bestimmung, durch das Endgerät, einer Summe aus einem Leistungserhöhungswert und der Sendeleistung der einzelnen PRACH-Übertragung als Sendeleistung der durchzuführenden PRACH-Übertragung in einem Fall, in dem die Summe aus dem RSRP und dem Band-Offset-Wert des Zielbands größer als der zweite Schwellenwert und kleiner oder gleich einem dritten Schwellenwert ist.

## Revendications

1. Un procédé de transmission de signal, comprenant :
la détermination (S301), par un dispositif terminal, avant d'effectuer une transmission de canal d'accès aléatoire physique (PRACH), si une transmission PRACH à effectuer est une première transmission PRACH ;
la détermination (S302), par le dispositif terminal, dans un cas où la transmission PRACH à effectuer n'est pas la première transmission PRACH, si la transmission PRACH à effectuer est une première transmission PRACH multiple ; et
**caractérisé par** l'initiation (S303), par le dispositif terminal, dans un cas où la transmission PRACH à effectuer est la première transmission PRACH multiple, de transmissions PRACH multiples vers un dispositif réseau sur la base d'une quantité de transmissions de la transmission PRACH à effectuer et d'une puissance de transmission de la transmission PRACH à effectuer, où la quantité de transmissions de la transmission PRACH à effectuer et la puissance de transmission de la transmission PRACH à effectuer sont déterminées par le dispositif terminal sur la base d'une puissance de réception de signal de référence (RSRP) ;
dans lequel, dans un scénario de transmission PRACH multibande, dans un cas où la transmission PRACH à effectuer est la première transmission PRACH multiple, le procédé comprend en outre :
la détermination, par le dispositif terminal, d'une valeur de décalage de bande d'une bande cible sur la base de la bande cible ;
la détermination, par le dispositif terminal, d'une quantité de transmissions de décalage de la transmission PRACH à effectuer sur la base de la valeur de décalage de bande de la bande cible et d'une troisième correspondance, où la troisième correspondance comprend une correspondance entre au moins une valeur de décalage de bande et au moins une quantité de transmissions de décalage ; et
la détermination, par le dispositif terminal, d'une somme d'une quantité de transmissions d'une bande de référence et de la quantité de transmissions de décalage de la transmission PRACH à effectuer en tant que quantité de transmissions de la transmission PRACH à effectuer.

2. Procédé selon la revendication 1, dans lequel le procédé comprend en outre :
l'initiation, par le dispositif terminal, dans un cas où la transmission PRACH à effectuer est la première transmission PRACH, de la transmission PRACH vers le dispositif réseau sur la base de la quantité de transmissions de la transmission PRACH à effectuer et de la puissance de transmission de la transmission PRACH à effectuer, où la quantité de transmissions de la transmission PRACH à effectuer et la puissance de transmission de la transmission PRACH à effectuer sont déterminées par le dispositif terminal sur la base de la RSRP.

3. Procédé selon l'une quelconque des revendications 1 ou 2, dans lequel, dans le scénario de transmission PRACH multibande, dans un cas où la transmission PRACH à effectuer est constituée par les transmissions PRACH multiples, le procédé comprend en outre :
la détermination, par le dispositif terminal, de la quantité de transmissions de décalage de la transmission PRACH à effectuer sur la base de la bande cible et d'une quatrième correspondance, ladite quatrième correspondance comprenant une correspondance entre au moins une bande et au moins une quantité de transmissions de décalage ; et
la détermination, par le dispositif terminal, de la somme de la quantité de transmissions de la bande de référence et de la quantité de transmissions de décalage de la transmission PRACH à effectuer en tant que quantité de transmissions de la transmission PRACH à effectuer.

4. Procédé selon l'une quelconque des revendications 1 à 3, dans lequel, dans le scénario de transmission PRACH multibande, dans un cas où la transmission PRACH à effectuer est la première transmission PRACH ou les premières transmissions PRACH multiples, le procédé comprend en outre :
la détermination, par le dispositif terminal, de la valeur de décalage de bande de la bande cible sur la base de la bande cible ;
la détermination, par le dispositif terminal, d'une valeur obtenue par soustraction du premier seuil de la somme de la RSRP et de la valeur de décalage de bande de la bande cible en tant que seconde différence ;
la détermination, par le dispositif terminal, d'une valeur de décalage de puissance d'émission de la transmission PRACH à effectuer sur la base de la seconde différence et d'une cinquième correspondance, ladite cinquième correspondance comprenant une correspondance entre au moins une différence et au moins une valeur de décalage de puissance d'émission ; et
la détermination, par le dispositif terminal, d'une somme de la valeur de décalage de puissance d'émission de la transmission PRACH à effectuer et d'une puissance d'émission d'une transmission PRACH unique en tant que puissance d'émission de la transmission PRACH à effectuer.

5. Procédé selon l'une quelconque des revendications 1 à 4, dans lequel le procédé comprend en outre :
l'obtention, par le dispositif terminal, d'une quantité de transmissions d'une transmission PRACH précédente et d'une puissance d'émission de la transmission PRACH précédente dans un cas où la transmission PRACH à effectuer n'est pas les premières transmissions PRACH multiples ;
la détermination, par le dispositif terminal, de la quantité de transmissions de la transmission PRACH à effectuer sur la base de la quantité de transmissions de la transmission PRACH précédente ;
la détermination, par le dispositif terminal, de la puissance d'émission de la transmission PRACH à effectuer sur la base de la puissance d'émission de la transmission PRACH précédente ; et
initiation, par le terminal, de la transmission PRACH vers le dispositif réseau sur la base de la quantité de transmissions de la transmission PRACH à effectuer et de la puissance d'émission de la transmission PRACH à effectuer.

6. Procédé selon l'une quelconque des revendications 1 à 5, dans lequel, avant de déterminer si une transmission PRACH à effectuer est une première transmission PRACH, le procédé comprend en outre :
la détermination, par le terminal, de la transmission PRACH à effectuer en tant que transmissions PRACH multiples ou transmission PRACH unique sur la base d'une condition de déclenchement, dans lequel la condition de déclenchement comprend au moins un seuil pour déclencher la transmission PRACH.

7. Procédé selon la revendication 6, dans lequel
la transmission PRACH à effectuer est la transmission PRACH multiple dans le cas où le RSRP est inférieur ou égal à un deuxième seuil ; ou
la transmission PRACH à effectuer est la transmission PRACH unique dans le cas où le RSRP est supérieur au deuxième seuil.

8. Procédé selon la revendication 7, dans lequel le procédé comprend en outre :
la détermination, par le terminal, d'une somme d'une valeur d'incrément de puissance et de la puissance d'émission de la transmission PRACH unique en tant que puissance d'émission de la transmission PRACH à effectuer dans le cas où le RSRP est supérieur au deuxième seuil et inférieur ou égal à un troisième seuil.

9. Procédé selon l'une quelconque des revendications 1 à 5, dans lequel, dans le scénario de transmission PRACH multibande, avant de déterminer si une transmission PRACH à effectuer est une première transmission PRACH, le procédé comprend en outre :
la détermination, par le terminal, de la valeur de décalage de bande de la bande cible sur la base de la bande cible ; et
la détermination, par le terminal, de la transmission PRACH à effectuer en tant que transmissions PRACH multiples ou transmission PRACH unique sur la base d'une condition de déclenchement et de la valeur de décalage de bande de la bande cible, dans lequel la condition de déclenchement comprend au moins un seuil pour déclencher la transmission PRACH.

10. Procédé selon la revendication 9, dans lequel la transmission PRACH à effectuer est la transmission PRACH multiple dans le cas où une somme du RSRP et de la valeur de décalage de bande de la bande cible est inférieure ou égale à un deuxième seuil.

11. Procédé selon la revendication 10, dans lequel la transmission PRACH à effectuer est la transmission PRACH unique dans le cas où la somme du RSRP et de la valeur de décalage de bande de la bande cible est supérieure au deuxième seuil.

12. Procédé selon la revendication 11, dans lequel le procédé comprend en outre :
déterminer, par le terminal, une somme d'une valeur d'incrément de puissance et de la puissance de transmission de la transmission PRACH unique comme puissance de transmission de la transmission PRACH à effectuer dans le cas où la somme du RSRP et de la valeur de décalage de bande de la bande cible est supérieure au deuxième seuil et est inférieure ou égale à un troisième seuil.
